# FASCICULE DE BREVET EUROPEEN

(11) **EP 1 091 673 B1**
(45) Date de publication et mention de la délivrance du brevet: **04.06.2003**
(21) Numéro de dépôt: 99957619.2
(22) Date de dépôt: 22.06.1999
(51) Int. Cl.: A47J 37/06

(54) **APPAREIL ELECTRIQUE A PLAQUES DE CUISSON ARTICULEES**
ELEKTRISCHES GERÄT MIT ARTIKULIERTEN KOCHPLATTEN
ELECTRICAL APPLIANCE WITH ARTICULATED HOT PLATES

(30) Priorité: 30.06.1998 FR 9808329
(43) Date de publication de la demande: 18.04.2001
(73) Titulaire: SEB S.A., 69130 Ecully (FR)
(72) Inventeur: VENIAT, Jacky, F-74150 Rumilly (FR)
(74) Mandataire: Somnier, Jean-Louis
(86) Numéro de dépôt international: FR9901494
(87) Numéro de publication internationale: WO00000069

(56) Documents cités:
- EP-A- 0 720 339
- EP-A- 0 792 608
- DE-A- 2 510 227
- US-A- 1 438 602
- US-A- 1 954 235
- US-A- 5 395 248

## Description

La présente invention concerne un appareil électrique comprenant deux plaques de cuisson articulées autour d'un axe entre une position d'écartement et une position de rapprochement permettant la superposition des deux plaques.

Ce type d'appareil, connu en soi, permet de cuire des aliments disposés entre les deux plaques.

A cet effet, chacune des deux plaques comporte une résistance chauffante permettant de cuire les deux faces des aliments, ces derniers pouvant être liquides tels de la pâte à gaufre ou solides tels de la viande, selon la destination de l'appareil concerné. Les résistances fonctionnent ainsi en sole et voûte.

L'appareil comporte en outre avantageusement un thermostat sur le circuit d'alimentation des résistances.

Pour assurer l'alimentation électrique des deux plaques, la résistance chauffante placée dans chacune d'elle est connectée à la résistance chauffante de l'autre plaque par des conducteurs qui s'étendent transversalement à l'axe d'articulation. Cette contrainte technique n'est pas sans poser de problèmes de réalisation, liés d'une part à la sécurité et à l'esthétique de l'appareil du fait de la position exposée des conducteurs entre les deux plaques, et d'autre part aux sollicitations mécaniques dues au passage de l'axe d'articulation dans cette zone de connexion électrique.

Le document US 1 438 602 propose une solution à ces problèmes. Toutefois, cette solution fait intervenir un grand nombre de pièces et s'avère donc relativement complexe et coûteuse à réaliser.

L'invention se propose d'apporter une solution simple à ces problèmes auxquels on a tenté jusqu'à présent de remédier par des structures d'articulation plus ou moins sophistiquées.

L'appareil électrique concerné comprend donc, de manière connue, deux plaques de cuisson articulées autour d'un axe entre une position d'écartement et une position de rapprochement permettant la superposition des deux plaques, chacune des deux plaques comportant une résistance chauffante connectée électriquement à la résistance chauffante de l'autre plaque par des conducteurs s'étendant transversalement à l'axe d'articulation.

Conformément à l'invention, l'appareil électrique est caractérisé en ce que lesdits conducteurs sont réalisés sous forme de lames flexibles dont chacune-associe deux à deux les extrémités des résistances en vis-à-vis.

Avec des fils conducteurs classiques, de section ronde et gainés d'un matériau isolant, il est nécessaire en effet de prévoir un certain dégagement entre les bords articulés des deux plaques, afin d'éviter un pincement qui entamerait la gaine voire sectionnerait le fil. Ce dégagement doit être compensé par un logement protecteur de conception plus ou moins élaborée puisqu'il doit répondre à des impératifs, on l'a vu, d'ordre à la fois électrique et mécanique. Au contraire, la réalisation des conducteurs sous forme de lames, autrement dit de bandes longitudinales plates, permet de réduire le dégagement visé plus haut sans risque de sectionnement des lames. Par ailleurs, ces dernières, bien que flexibles, n'ont pas l'extrême souplesse des fils conducteurs classiques ; leur forme de lame leur confère une rigidité latérale et donc une meilleure tenue, ce qui les rend moins exposées aux effets de torsion susceptibles d'endommager les fils et d'entraîner un contact avec un conducteur voisin.

Les lames conductrices flexibles sont de préférence en acier, ce qui leur assure une meilleure résistance mécanique que le cuivre des conducteurs traditionnels. La conductivité moindre de l'acier reste néanmoins suffisante dans l'application aux appareils électriques de cuisson concernés.

De manière pratique lors de la fabrication de l'appareil, les lames conductrices flexibles sont disposées, du côté extérieur du corps de l'appareil, au-dessus d'une pièce d'articulation associant les deux plaques de cuisson et sont protégées par un capot en un matériau électriquement et, de préférence thermiquement, isolant, solidaire de l'une des deux plaques. L'articulation étant elle-même nécessairement réalisée en un matériau électriquement isolant, les lames conductrices sont ainsi disposées entre deux parties isolantes du corps de l'appareil sans qu'il soit nécessaire de les gainer.

Avantageusement, l'appareil comporte des moyens d'articulation associés à des moyens de guidage individuel desdites lames flexibles, le guidage s'effectuant transversalement à l'axe d'articulation lors de l'écartement et du rapprochement des deux plaques. Ceci est particulièrement intéressant lorsque le corps de l'appareil a une certaine épaisseur, résultant soit de l'épaisseur des deux plaques, soit de l'épaisseur des aliments à cuire ; en fonction de cette épaisseur varie en effet le jeu des lames non tendues au-dessus de l'articulation, en position d'écartement des deux plaques. Les moyens de guidage associés au fonctionnement de l'articulation permettent d'éviter tout contact entre deux lames voisines lorsque l'articulation est sollicitée pour un écartement ou un rapprochement des deux plaques. Tout effet de torsion étant évité, on prolonge en outre avantageusement la durée de vie des conducteurs.

Dans un mode de réalisation préféré de l'invention, les moyens de guidage individuels des lames sont ménagés à la surface extérieure d'une pièce d'articulation centrale rapportée, complétant des pièces d'articulation latérales sur les bords arrière des deux plaques.

On a ainsi une pièce d'articulation centrale fabriquée indépendamment des pièces d'articulation latérales, ces dernières étant avantageusement venues de moulage avec le corps de chacune des deux plaques de cuisson, tandis que la pièce d'articulation centrale peut comporter des aménagements divers, facilement réalisables lorsqu'il s'agit d'une pièce rapportée.

La pièce d'articulation comportant lesdits moyens de guidage peut d'ailleurs être surmoulée ou liée mécaniquement au corps de chacune des deux plaques de cuisson, par clipsage, bouterollage, déformation à chaud ou analogue.

Plus précisément dans le mode de réalisation préféré, ladite pièce d'articulation constitue un logement de type cylindrique pour une pièce d'articulation intérieure complémentaire. La surface extérieure de ladite pièce intérieure en contact avec la surface intérieure de ladite pièce formant logement porte, transversalement à l'axe d'articulation, des côtes pénétrant dans la paroi du logement et saillant à la surface extérieure de ce dernier pour constituer lesdits moyens de guidage individuel des lames flexibles.

Cette disposition permet à la fois de limiter le décalage axial entre les deux pièces d'articulation centrale et de guider les lames flexibles lorsque l'articulation est sollicitée pour l'écartement ou le rapprochement des deux plaques de cuisson. Ceci est de nature à préserver la longévité des lames flexibles, en supprimant pratiquement tout risque de torsion, alors que ceux-ci se trouvaient déjà considérablement réduits par la forme même de lames des conducteurs selon l'invention.

L'articulation portant les lames conductrices constitue par ailleurs un sous-ensemble intégré adapté à la connexion en un seul mouvement des deux résistances et du thermostat. La fabrication s'en trouve simplifiée, avec des avantages d'ordre pécuniaire et ergonomique.

L'invention sera mieux comprise à l'aide de la description détaillée qui suit.

Aux dessins annexés donnés à titre d'exemples non limitatifs,
- la figure 1 est une vue en élévation d'un appareil conforme à l'invention, les plaques de cuisson, vues de dessus, côté face extérieure, se trouvant en position écartée et dépourvues de leur habillage de surface;
- la figure 2 est une vue en coupe selon l'axe de symétrie X-X' de la figure 1, les plaques étant revêtues de leur habillage de surface;
- la figure 3 est une vue à échelle agrandie de la partie centrale de la figure 1, montrant les lames conductrices et leur support ;
- la figure 4 est une vue à échelle agrandie de la partie centrale de la figure 2, montrant les lames supportées par une partie de l'articulation.

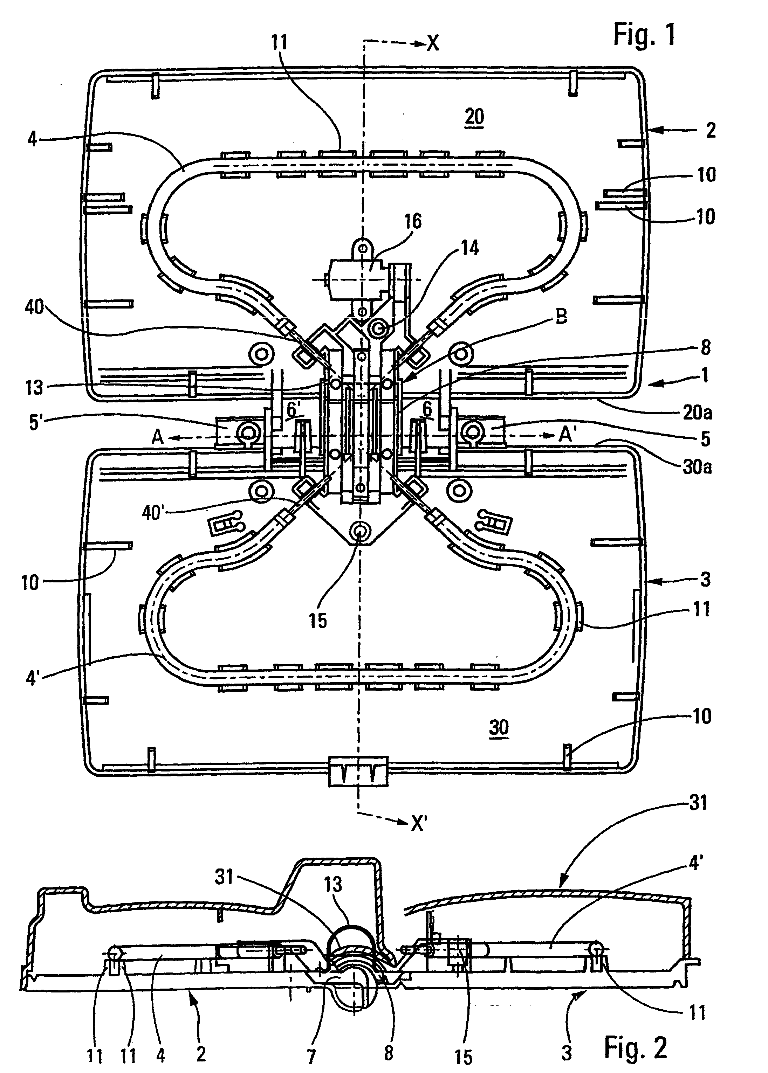

L'appareil 1 représenté à la figure 1 comporte deux plaques de cuisson 2, 3 dont chacune d'elles comporte un corps sensiblement rectangulaire 20, 30 formant cuvette et moulé en une matière plastique isolante et résistant à la chaleur. Des arêtes de renforcement 10 venues de moulage à la périphérie intérieure de chaque corps 20, 30 lui confèrent la rigidité nécessaire pour servir de logement à un élément chauffant 4, 4' constitué par exemple par une résistance tubulaire blindée de type classique. Celle-ci repose sur des supports 11 également venus de moulage avec le corps 20, 30 et se dressant sur la paroi de fond de ce dernier.

Les deux corps 20, 30, généralement symétriques, sont articulés du côté d'un bord arrière 20a, 30a, autour d'un axe A-A' entre une position d'écartement représentée aux figures et une position de rapprochement permettant la superposition des deux plaques 2, 3 pour la cuisson. L'articulation elle-même sera décrite en détail, après présentation du mode de connexion électrique prévu par l'invention et pour lequel cette articulation est particulièrement adaptée.

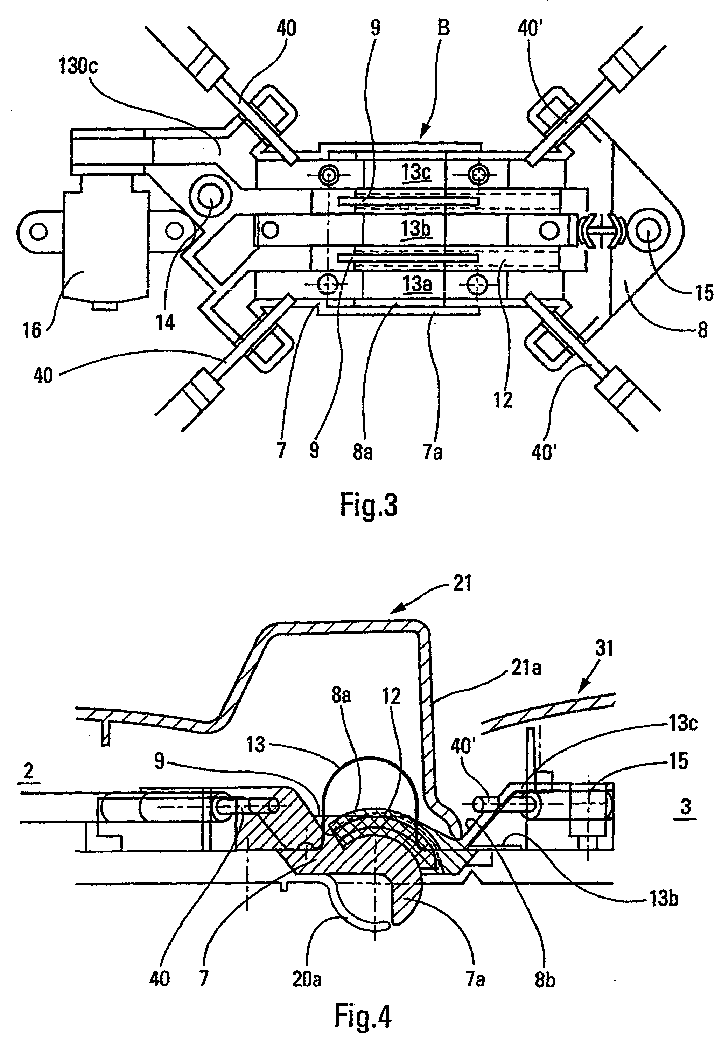

Les deux résistances chauffantes 4, 4' sont connectées électriquement l'une à l'autre par des conducteurs réalisés, conformément à l'invention, sous forme de lames flexibles 13 constituées par des bandes plates en acier. Deux lames d'extrémité 13a, 13c (voir figure 3) relient deux à deux les extrémités 40, 40' des résistances en vis-à-vis, une troisième lame intermédiaire 13b formant la masse. Chaque extrémité de résistance 40, 40' se trouve en contact direct avec une lame conductrice correspondante, après sertissage, clipsage ou analogue.

La lame d'extrémité 13c présente une extrémité 130c en fourche permettant d'assurer simultanément la connexion d'un thermostat 16 et de la résistance 4 dans l'une des plaques de cuisson, plaçant ainsi le thermostat 16 sur le circuit d'alimentation des résistances 4, 4'.

La liaison articulée entre les deux corps 20, 30 est assurée par deux parties d'articulation complémentaires s'étendant selon l'axe d'articulation A-A', à savoir (voir figure 1) une partie 5 de section sensiblement circulaire, solidaire de l'une des plaques 3 considérée ici comme la plaque fixe, et dont les extrémités servent de siège de pivotement aux extrémités d'une partie 6 de section également sensiblement circulaire et solidaire de l'autre plaque 2 considérée ici comme la plaque mobile. Les parties 5 et 6, venues de moulage avec les corps 30 et 20 respectivement, sont donc elles aussi en un matériau isolant.

Dans la version représentée aux figures, qui correspond à un mode de réalisation préféré de l'invention, les parties 5 et 6 de l'articulation ne sont pas continues, mais sont constituées de deux parties symétriques 5, 5' et 6, 6' encadrant une partie d'articulation centrale B servant de support aux lames flexibles 13 connectant entre elles les résistances chauffantes 4, 4'. Cette partie d'articulation B, de type cylindrique, va maintenant être décrite en détail, en référence principalement à la figure 4.

Dans l'exemple représenté, il s'agit d'un bloc rapporté, moulé dans un matériau isolant et comprenant deux pièces complémentaires, à savoir d'une part une pièce intérieure 7, rendue solidaire en 14 de la plaque 2 et complétant la partie d'articulation mobile 6 le long de l'axe A-A', d'autre part une pièce extérieure 8 formant logement pour la pièce 7 et rendue solidaire en 15 de la plaque 3 de manière à compléter la partie d'articulation fixe 5 le long de l'axe A-A'.

Plus précisément, l'extrémité libre 7a de la pièce intérieure 7 du côté opposé au point de fixation 14 présente, transversalement à l'axe d'articulation A-A', une section matérialisée sur sensibiement trois-quarts de cercle, que vient compléter pour former une section circulaire complète, une portion du bord arrière 20a du corps 20 de la plaque 2. L'extrémité libre 8a de la pièce 8 formant logement du côté opposé au point de fixation 15 présente, transversalement à l'axe d'articulation A-A', une section en arc de cercle adaptée à la section de l'extrémité 7a pour permettre son pivotement dans le logement 8a.

La surface extérieure de l'extrémité 7a en contact avec la surface intérieure du logement 8a porte, transversalement à l'axe d'articulation A-A', des côtes 9 saillant à la surface extérieure du logement 8a à travers des encoches 12 correspondantes ménagées dans la paroi de ce dernier. Cette disposition permet non seulement de réduire le jeu axial entre les pièces 7 et 8 du bloc d'articulation centrale B, mais elle permet également le guidage individuel des lames flexibles 13 transversalement à l'axe d'articulation lors de l'écartement et du rapprochement des deux plaques de cuisson 2 et 3.

Les lames flexibles 13 sont en effet fixées sur la pièce 7 du côté de la plaque 2 et sur la pièce 8 du côté de la plaque 3, avec un jeu au-dessus du bloc B de manière à suivre le déploiement de l'articulation et permettre la superposition des deux plaques de cuisson 2, 3. En position d'écartement des deux plaques 2, 3 comme représenté aux figures, les lames 13 forment une boucle au-dessus du bloc B ; en position de superposition des deux plaques, les lames 13 sont tendues à la surface extérieure de la pièce 8a formant logement et, grâce aux côtes 9, elles sont guidées avec un écart constant entre elles, ce qui réduit les sollicitations mécaniques susceptibles d'entraîner torsion et cisaillement et favorise ainsi leur longévité.

Le corps 20, 30 formant cuvette pour chacune des deux plaques de cuisson est fermé par un capot 21, 31 en un matériau électriquement isolant. Le capot 21 de la plaque 2 est conçu pour interdire un accès intempestif aux lames conductrices 13. S'étendant dans un plan sensiblement parallèle au plan de la plaque 2 dont il est solidaire, il comporte un retour 21 a s'étendant perpendiculairement au plan de ladite plaque 2 et descendant jusqu'à une zone en dépression 8b ménagée à la surface extérieure de la partie d'articulation centrale 8 solidaire de la plaque 3 parallèlement à l'axe d'articulation A-A'.

Les aménagements qui viennent d'être décrits trouvent une application particulièrement avantageuse dans les appareils électriques de cuisson du type gaufrier, croque-gaufre ou grill-viande comportant deux plaques chauffantes articulées comme décrit dans le préambule.

Le problème du passage du courant d'une plaque articulée à l'autre est ainsi résolu de manière relativement simple et peu coûteuse, avec une sécurité et une fiabilité de fonctionnement néanmoins accrues du fait que les lames conductrices sont à l'abri de toute sollicitation mécanique.

L'articulation portant les lames conductrices constitue un sous-ensemble intégré permettant d'assurer en un seul mouvement la connexion des résistances et du thermostat. La diminution du nombre d'enfichages se traduit par une réduction du prix de revient et une meilleure ergonomie du fait de la diminution des facteurs susceptibles d'entraîner des troubles musculo-squelettiques.

L'invention permet en outre de réduire l'encombrement des charnières et d'obtenir ainsi un appareil plus esthétique et moins encombrant.

De nombreuses variantes à l'exemple de réalisation décrit pourraient être prévues, tout en restant dans le cadre de l'invention tel que définie dans les revendications.

Ainsi, d'autres détails d'articulation pourraient être adaptés à la connexion particulière des résistances chauffantes prévue par l'invention. Les moyens de guidage individuel des lames conductrices pourraient par exemple être constitués par des rainures ménagées, non pas sur une pièce centrale d'articulation, mais sur une pièce centrale en matière isolante rapportée, doublant les pièces d'une liaison articulée continue.

## Revendications

1. Appareil électrique (1) comprenant deux plaques de cuisson (2, 3) articulées autour d'un axe (A-A') entre une position d'écartement et une position de rapprochement permettant la superposition des deux plaques, chacune d'elles (2, 3) comportant une résistance chauffante (4, 4') connectée électriquement à la résistance chauffante (4', 4) de l'autre plaque (3, 2) par des conducteurs s'étendant transversalement à l'axe d'articulation (A-A')_{,} **caractérisé en ce que** lesdits conducteurs sont réalisés sous forme de lames flexibles (13a, 13c) dont chacune associe deux à deux les extrémités (40, 40') des résistances en vis-à-vis.

2. Appareil électrique conforme à la revendication 1, **caractérisé en ce que** lesdits conducteurs comprennent une troisième lame (13b) formant la masse.

3. Appareil électrique conforme à l'une des revendications 1 ou 2, **caractérisé en ce que** l'une desdites lames flexibles (13c) présente une extrémité en fourche (130c) permettant d'assurer simultanément la connexion d'un thermostat (16) et d'une résistance (4), plaçant ainsi le thermostat (16) sur le circuit d'alimentation des deux résistances (4, 4').

4. Appareil électrique conforme à l'une des revendications 1 à 3, **caractérisé en ce que** lesdites lames (13) sont en acier.

5. Appareil électrique conforme à l'une des revendications 1 à 4, **caractérisé en ce que** lesdites lames (13) sont disposées, du côté extérieur du corps de l'appareil (1), au-dessus de pièces d'articulation (7, 8) associant les deux plaques et sont protégées par un capot (21) en un matériau isolant, solidaire de l'une des deux plaques (2).

6. Appareil électrique conforme à la revendication 5, **caractérisé en ce que** le dit capot (21), s'étendant dans un plan sensiblement parallèle au plan de la plaque (2) dont il est solidaire, comporte un retour (21a) s'étendant perpendiculairement au plan de ladite plaque (2) et descendant jusqu'à une zone en dépression (8b) ménagée à la surface extérieure d'une partie d'articulation (8) solidaire de l'autre plaque (3) parallèlement à l'axe d'articulation A-A'.

7. Appareil électrique conforme à l'une des revendications 1 à 6, comportant en outre un thermostat (16) placé sur le circuit d'alimentation des deux résistances (4, 4'), **caractérisé en ce que** lesdites lames flexibles (13) sont portées par une pièce d'articulation (7, 8) de manière à constituer avec cette dernière un sous-ensemble (B) permettant d'associer mécaniquement les deux plaques (2, 3) et d'assurer la connexion électrique simultanée des deux résistances (4, 4') et du thermostat (16).

8. Appareil électrique conforme à l'une des revendications 1 à 7, **caractérisé en ce qu'**il comporte des moyens d'articulation (7a, 8a) associés à des moyens de guidage individuel (9) desdites lames flexibles (13), le guidage s'effectuant transversalement à l'axe d'articulation (A-A') lors de l'écartement et du rapprochement des deux plaques (2, 3).

9. Appareil électrique conforme à la revendication 8, **caractérisé en ce que** lesdits moyens de guidage individuel (9) sont ménagés à la surface extérieure d'une pièce d'articulation (8).

10. Appareil électrique conforme à la revendication 9, **caractérisé en ce que** ladite pièce d'articulation comportant lesdits moyens de guidage individuel (9) est une pièce d'articulation centrale rapportée (8), complétant des pièces d'articulation latérales (5, 6) sur les bords arrière (20a, 30a) des deux plaques (2, 3).

11. Appareil électrique conforme à l'une des revendications 9 ou 10, **caractérisé en ce que** ladite pièce d'articulation (8) comportant lesdits moyens de guidage individuel (9) constitue un logement (8a) de type cylindrique pour une pièce d'articulation intérieure complémentaire (7), chacune des deux pièces d'articulation (7, 8) étant solidaire respectivement d'une plaque (2, 3).

12. Appareil électrique conforme à la revendication 11, **caractérisé en ce que** la surface extérieure de ladite pièce d'articulation intérieure (7a) en contact avec la surface intérieure de ladite pièce d'articulation formant logement (8a) porte, transversalement à l'axe d'articulation, des côtes (9) pénétrant dans la paroi du logement (8a) et saillant à la surface extérieure de ce dernier pour constituer lesdits moyens de guidage individuel des lames flexibles (13).

13. Appareil électrique conforme à l'une des revendications 9 à 12, **caractérisé en ce qu'**en position de superposition des deux plaques (2, 3), les lames flexibles (13) sont tendues à la surface extérieure de ladite pièce d'articulation (8) munie des moyens de guidage (9), ces derniers maintenant lesdites lames (13) séparées, transversalement à l'axe d'articutation (A-A'). et **en ce qu'**en position d'écartement des deux plaques (2, 3), les lames flexibles (13) forment une boucle au-dessus de ladite pièce d'articulation (8).

14. Appareil électrique du type gaufrier, croque-gaufre ou grill-viande conforme à l'une des revendications 1 à 13.

## Claims

1. An electrical appliance (1) comprising two hotplates (2, 3) articulated about an axis (A-A') between a spaced-apart position and a brought-together position enabling the two plates to be superposed, each hotplate (2, 3) comprising a heating resistance (4, 4') connected electrically to the heating resistance (4', 4) of the other hotplate (3, 2) by leads extending transversely of the articulation axis (A-A'), **characterised in that** the said leads are made in the form of flexible strips (13a, 13c) each of which associates in pairs the facing ends (40, 40') of the resistances.

2. An electrical appliance according to claim 1, **characterised in that** the said leads comprise a third strip (13b) forming the earth.

3. An electrical appliance according to claim 1 or 2, **characterised in that** one of the said flexible strips (13c) has a forked end (130c) enabling a thermostat (16) and a resistance (4) to be connected simultaneously so that the thermostat (16) is situated in the power supply circuit for the two resistances (4, 4').

4. An electrical appliance according to any one of claims 1 to 3, **characterised in that** the said strips (13) are of steel.

5. An electrical appliance according to any one of claims 1 to 4, **characterised in that** the said strips (13) are disposed, on the outside of the body of the appliance (1), above articulation members (7, 8) connecting the two plates and are protected by a cap (21) of an insulating material connected to one of the two plates (2).

6. An electrical appliance according to claim 5, **characterised in that** the said cap (21), extending in a plane substantially parallel to the plane of the plate (2) to which it is connected, comprises a return (21a) extending perpendicularly to the plane of the said plate (2) and descending to a recessed zone (8b) formed on the outer surface of an articulation part (8) connected to the other plate (3) parallel to the articulation axis (A-A').

7. An electrical appliance according to any one of claims 1 to 6, also comprising a thermostat (16) in the power supply circuit of the two resistances (4, 4'), **characterised in that** the said flexible strips (13) are carried by an articulation member (7, 8) so as to form with the latter a sub-assembly (B) enabling the two plates (2, 3) to be mechanically connected and ensure the simultaneous electrical connection of the two resistances (4, 4') and the thermostat (16).

8. An electrical appliance according to any one of claims 1 to 7, **characterised in that** it comprises articulation means (7a, 8a) associated with individual guide means (9) for the said flexible strips (13), guidance being effected transversely of the articulation axis (A-A') when the two plates (2, 3) are moved apart and brought together.

9. An electrical appliance according to claim 8, **characterised in that** the said individual guide means (9) are formed on the outer surface of an articulation member (8).

10. An electrical appliance according to claim 9, **characterised in that** the said articulation member provided with the said individual guide means (9) is an attached central articulation member (8) which completes lateral articulation members (5, 6) on the rear edges (20a, 30a) of the two plates (2, 3).

11. An electrical appliance according to claim 9 or 10, **characterised in that** the said articulation member (8) provided with the said individual guide means (9) forms a recess (8a) of cylindrical type for a complementary inner articulation member (7), each of the two articulation members (7, 8) being respectively connected to a plate (2, 3).

12. An electrical appliance according to claim 11, **characterised in that** the outer surface of the said inner articulation member (7a) in contact with the inner surface of the said articulation member forming the recess (8a) carries, transversely of the articulation axis, ribs (9) penetrating into the wall of the recess (8a) and projecting from the outer surface of the latter to form the said individual guide means for the flexible strips (13).

13. An electrical appliance according to any one of claims 9 to 12, **characterised in that** in the position in which the two plates (2, 3) are superimposed, the flexible strips (13) are tensioned at the outer surface of the said articulation member (8) provided with the guide means (9), the latter keeping the said strips (13) separate, transversely of the articulation axis (A-A'), and **in that** in the position in which the two plates (2, 3) are spaced apart the flexible strips (13) form a loop above the said articulation member (8).

14. An electrical appliance of the waffle iron type, sandwich toaster or meat grill, in accordance with any one of claims 1 to 13.

## Patentansprüche

1. Elektrisches Gerät (1) mit zwei Kochplatten (2, 3), die um eine Gelenkachse (A-A') zwischen einer entfernten Stellung und einer angenäherten Stellung verschwenkbar sind, in der die beiden Platten übereinander gelagert werden können, wobei jede Kochplatte (2, 3) einen elektrischen Heizwiderstand (4, 4') umfaßt, der mit dem elektrischen Heizwiderstand (4', 4) der anderen Kochplatte (3, 2) über Leiter elektrisch verbunden ist, die sich quer zur Gelenkachse (A-A') erstrecken, **dadurch gekennzeichnet ist, daß** die Leiter in Form von flexiblen Lamellen (13a, 13c) realisiert sind, von denen jede die gegenüberliegenden Enden (40, 40') der Widerstände paarweise verbindet.

2. Gerät nach Anspruch 1, **dadurch gekennzeichnet , daß** die Leiter eine dritte die Masse bildende Lamelle (13b) umfassen.

3. Gerät nach Anspruch 1 oder 2, **dadurch gekennzeichnet , daß** eine (13c) der flexiblen Lamellen ein gabelförmiges Ende (130c) aufweist, das die Verbindung eines Thermostats (16) und eines Widerstands (4) gleichzeitig sicherstellen kann, womit der Thermostat (16) in dem Versorgungsstromkreis der beiden Widerstände (4, 4') angeordnet ist.

4. Gerät nach einem der Ansprüche 1 bis 3, **dadurch gekennzeichnet , daß** die Lamellen (13) aus Stahl sind.

5. Gerät nach einem der Ansprüche 1 bis 4, **dadurch gekennzeichnet , daß** die Lamellen (13) an der Außenseite des Gehäuses des Geräts (1) über die beiden Kochplatten verbindenden Gelenkstücken (7, 8) angeordnet und von einer Abdeckung (21) aus einem Isolationsmaterial geschützt sind, die mit einer (2) der beiden Kochplatten fest verbunden ist.

6. Gerät nach Anspruch 5, **dadurch gekennzeichnet , daß** die Abdeckung (21), die sich in einer im wesentlichen zur Kochplatte (2) parallelen Ebene erstreckt, welche Kochplatte mit der Abdeckung fest verbunden ist, einen Umschlag (21a) umfasst, der sich senkrecht zur Ebene der Kochplatte (2) erstreckt und bis zu einem Absenkbereich (8b) nach unten verläuft, der in der Außenfläche eines Gelenkteils (8) eingebracht ist, das mit der anderen Kochplatte (3) parallel zur Gelenkachse A-A' fest verbunden ist.

7. Gerät nach einem der Ansprüche 1 bis 6 mit unter anderem einem Thermostat (16), der in dem Versorgungsstromkreis der beiden Widerstände (4, 4') angeordnet ist, **dadurch gekennzeichnet , daß** die flexiblen Lamellen (13) von einem Gelenkstück (7, 8) derart getragen sind, daß sie mit dem Gelenkstück eine Unterbaugruppe (B) bilden, welche die beiden Kochplatten (2, 3) mechanisch verbinden und die gleichzeitige elektrische Verbindung der beiden Widerstände (4, 4') und des Thermostats (16) sicherstellen kann.

8. Gerät nach einem der Ansprüche 1 bis 7, **dadurch gekennzeichnet , daß** es eine Gelenkeinrichtung (7a, 8a) umfasst, die mit einer individuellen Führungseinrichtung (9) der flexiblen Lamellen (13) verbunden ist, wobei die Führung quer zur Gelenkachse (A-A') beim Entfernen und Annähern der beiden Kochplatten (2,3) erfolgt.

9. Gerät nach Anspruch 8, **dadurch gekennzeichnet , daß** die individuelle Führungseinrichtung (9) an der Außenfläche eines Gelenkstücks (8) angebracht ist.

10. Gerät nach Anspruch 9, **dadurch gekennzeichnet , daß** das Gelenkstück, das die individuelle Führungseinrichtung umfasst, ein zentrales Anbaugelenkstück (8) ist, das seitliche Gelenkstücke (5, 6) an den hinteren Rändern der beiden Kochplatten (2, 3) ergänzt.

11. Gerät nach Anspruch 9 oder 10, **dadurch gekennzeichnet , daß** das Gelenkstück (8), das die individuelle Führungseinrichtung (9) umfasst, eine Aufnahme (8a) des zylindrischen Typs für ein komplementäres inneres Gelenkstück (7) bildet, wobei jedes Gelenkstück (7, 8) fest mit der jeweiligen Kochplatte (2, 3) verbunden ist

12. Gerät nach Anspruch 11, **dadurch gekennzeichnet , daß** die Außenfläche des inneren Gelenkstücks (7a), das die Innenfläche des die Aufnahme (8a) bildenden Gelenkstücks berührt, quer zur Gelenkachse Rippen (9) trägt, welche die Wand der Aufnahme (8a) durchsetzen und aus der Außenfläche dieser Aufnahme vorstehen, um die individuelle Führungseinrichtung der flexiblen Lamellen (13) zu bilden.

13. Gerät nach einen der Ansprüche 9 bis 12, **dadurch gekennzeichnet , daß** in der übereinander gelagerten Stellung der beiden Kochplatten (2, 3) die flexiblen Lamellen hin zur Außenfläche des Gelenkstücks (8) gespannt sind, das mit einer Führungseinrichtung (9) versehen ist, wobei die Führungseinrichtung die Lamellen (13) quer zur Gelenkachse (A-A') getrennt hält, und daß in der angenäherten Stellung der beiden Kochplatten (2, 3) die flexiblen Lamellen eine Wölbung oder Schleife über dem Gelenkstück (8) bilden.

14. Gerät des Waffeleisentyps, des Gebäckpresstyps oder des Grillfleischtyps nach einem der Ansprüche 1 bis 13.
